# EUROPÄISCHE PATENTSCHRIFT

(11) **EP 2 584 672 B1**
(45) Veröffentlichungstag und Bekanntmachung des Hinweises auf die Patenterteilung: **07.08.2019**
(21) Anmeldenummer: 12185064.8
(22) Anmeldetag: 19.09.2012
(51) Int. Cl.: H02K 3/52, H02K 11/33, H02K 1/27, H02K 5/22

(54) **Gehäuseteil für eine elektrische Maschine**
Housing part for an electrical machine
Elément de boîtier pour une machine électrique

(30) Priorität: 19.10.2011 DE 102011084763
(43) Veröffentlichungstag der Anmeldung: 24.04.2013
(73) Patentinhaber: ROBERT BOSCH GMBH, 70442 Stuttgart (DE)
(72) Erfinder: Meyer, Christian, 76228 Karlsruhe-Wolfartsweier (DE); Acker, Christian, 67480 Fort-Louis (FR); Bolz, Martin-Peter, 77815 Buehl (DE)

(56) Entgegenhaltungen:
- WO-A1-2011/114554
- JP-A- 2010 104 212
- US-A- 5 770 902
- US-A1- 2004 232 786

## Beschreibung

### Technisches Gebiet

Die vorliegende Erfindung betrifft den Aufbau elektrischer Maschinen, insbesondere ein Gehäuseteil, das sowohl ein Verschließen eines Gehäuses einer elektrischen Maschine als auch eine elektrische Kontaktierung von in der elektrischen Maschine befindlichen Statorspulen über eine externe elektrische Verbindungsschnittstelle ermöglicht.

### Stand der Technik

Rotatorische elektrische Maschinen werden häufig als Innenläufermaschinen vorgesehen. Ein Stator von Innenläufermaschinen weist nach innen gerichtete Statorzähne auf, deren Enden einen Innenraum umgeben. Bei einer elektronisch kommutierten Maschine ist in dem Innenraum ein mit Permanentmagneten versehener Läufer drehbeweglich angeordnet. Die Statorzähne sind in geeigneter Weise mit Statorspulen versehen und werden gemäß einer elektronischen Kommutierung wechselweise bestromt, um ein wanderndes Magnetfeld im Innenraum der elektrischen Maschine zu erzeugen. Dieses bewirkt ein Drehmoment an dem Läufer, so dass dieser in eine Drehbewegung versetzt wird.

Der Stator wird in der Regel in einem zylindrischen Gehäuse vorgesehen, das beidseitig in geeigneter Weise abgeschlossen ist. Zumindest an einem Kopfende des zylindrischen Gehäuses ist ein während der Montage der elektrischen Maschine aufzusetzender Gehäusedeckel vorgesehen, der eine Läuferwelle lagert und insbesondere einen elektrischen Anschluss der Statorspule zur elektrischen Energieversorgung bereitstellen soll. Weiterhin soll möglichst gehäusenah eine elektronische Baugruppe angeordnet werden, die die Steuerung bzw. Kommutierung der elektrischen Maschine unterstützt bzw. durchführt.

Derzeit bekannte elektrische Maschinen sehen für die Kontaktierung der Statorwicklung und für die Verbindung mit der elektronischen Baugruppe verschiedene Bauteile vor. Dies erhöht den Aufwand während der Montage erheblich.

Es ist daher Aufgabe, eine elektrische Maschine mit Gehäuseelementen aufzubauen, durch die die Montage der elektrischen Maschine mit möglichst wenigen Montageschritten erfolgen kann.

Mit der US 5 770 902 A ist ein Elektromotor bekannt geworden, bei dem oberhalb eines Gehäusedeckels zwei Stanzgitter angeordnet sind. Dabei weist der Gehäusedeckel axiale Durchbrüche auf, durch die Leiter für Hallsensoren und für die Bestromung der Statorspulen geführt werden.

Die WO 2011/114554 A1 zeigt ebenfalls einen Elektromotor, bei dem die Statorspulen mit einer auf dem Stator angeordneten Verschaltungsplatte verbunden sind. Von der Verschaltungsplatte führt ein Leiter zu einem Verbindungsbereich innerhalb eines Gehäusedeckels, in dem der Leiter mit einer Leiterbahn einer Elektronikplatine verbunden ist.

### Offenbarung der Erfindung

Diese Aufgabe wird durch das Gehäuseteil zum Aufbau einer elektrischen Maschine gemäß Anspruch 1 sowie durch die elektrische Maschine gemäß dem nebengeordneten Anspruch gelöst.

Weitere vorteilhafte Ausgestaltungen der vorliegenden Erfindung sind in den abhängigen Ansprüchen angegeben.

Gemäß einem ersten Aspekt ist ein Gehäuseteil zum Aufbau einer rotatorischen elektrischen Maschine vorgesehen. Das Gehäuseteil umfasst:
- ein Deckelteil zum Aufsetzen auf eine Stirnseite eines Gehäuses der elektrischen Maschine;
- eine Leiterplatte zum Bereitstellen einer elektronischen Baugruppe, um die Ansteuerung und/oder Energieversorgung der elektrischen Maschine zu unterstützen bzw. durchzuführen;
- ein oder mehrere Leiterelemente zum Herstellen einer elektrischen Verbindung zwischen einer Statorspule und der Leiterplatte, wobei das eine Leiterelement oder die mehreren Leiterelemente in dem Deckelteil integriert ausgebildet ist oder sind.

Eine Idee des obigen Gehäuseteils besteht darin, mittels eines einzigen Bauteils in einem Verfahrensschritt bei der Montage einer elektrischen Maschine gleichzeitig das Gehäuse der elektrischen Maschine zu schließen und die Verschaltung der Statorspule zu gewährleisten. Dadurch wird die Teileanzahl bei der Montage der elektrischen Maschine verringert und Montageprozessschritte und damit verbundene Kosten werden reduziert.

Weiterhin kann das Deckelteil ein Lager aufweisen, um eine Läuferwelle zu lagern.

Es kann vorgesehen sein, dass die Leiterplatte parallel zum Deckelteil ausgerichtet ist.

Gemäß einer Ausführungsform können das eine oder die mehreren Leiterelemente jeweils mindestens ein insbesondere sich in Richtung der Leiterplatte erstreckendes Anschlusselement aufweisen.

Erfindungsgemäß ist vorgesehen, dass das Deckelteil mindestens eine Durchgangsöffnung zum Aufnehmen eines Anschlussdrahts zum Kontaktieren der Statorspule aufweist, wobei die Durchgangsöffnung so an dem Anschlusselement angeordnet ist, dass der Anschlussdraht nach dem Durchführen durch die Durchgangsöffnung und dem anschließenden Umbiegen zur einer entsprechenden Klemme, die in einer Ebene parallel zur Leiterplatte oder senkrecht zur axialen Richtung eines zylindrischen Poltopfs des Gehäuses ausgerichtet ist, anhand eines mechanischen Klemmens durch diese Klemme mit dem Anschlusselement verbindbar ist.

Erfindungsgemäß ist die Durchgangsöffnung auf der Seite des Deckelteils, die der Seite, von der sich das Anschlusselement in Richtung der Leiterplatte erstreckt, gegenüberliegt, trichterförmig ausgebildet.

Ein oder mehrere weitere Leiterelemente können vorgesehen sein, um eine elektrische Kontaktierung der Leiterplatte von extern zu ermöglichen. Dadurch kann die Leiterplatte von extern elektrisch angesteuert und mit elektrischer Energie versorgt werden.

Gemäß einer Ausführungsform können sich das eine oder die mehreren Leiterelemente von dem Deckelteil in radialer Richtung in einen Steckverbinder erstrecken.

Gemäß einem weiteren Aspekt ist eine elektrische Maschine vorgesehen, umfassend:
- ein zylindrisches Gehäuse, in dem ein Stator mit mindestens einer Statorspule angeordnet ist;
- ein Gehäuseteil, um das zylindrische Gehäuse stirnseitig zu verschließen, wobei ein Anschlussdraht zum Kontaktieren der Statorspule durch das Deckelteil zur Kontaktierung der Leiterplatte geführt ist.

Weiterhin kann das Gehäuseteil formschlüssig an dem Gehäuse gehalten sein.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figuren 1a bis 1c: Querschnittsansichten durch eine elektrische Maschine in achsparallelen Schnittebenen;
- Figur 2: eine Draufsicht auf das Gehäuseteil der Figuren 1a bis 1c;
- Figur 3: eine perspektivische Darstellung des Gehäuseteils der Figuren 1a bis 1c.

### Beschreibung von Ausführungsformen

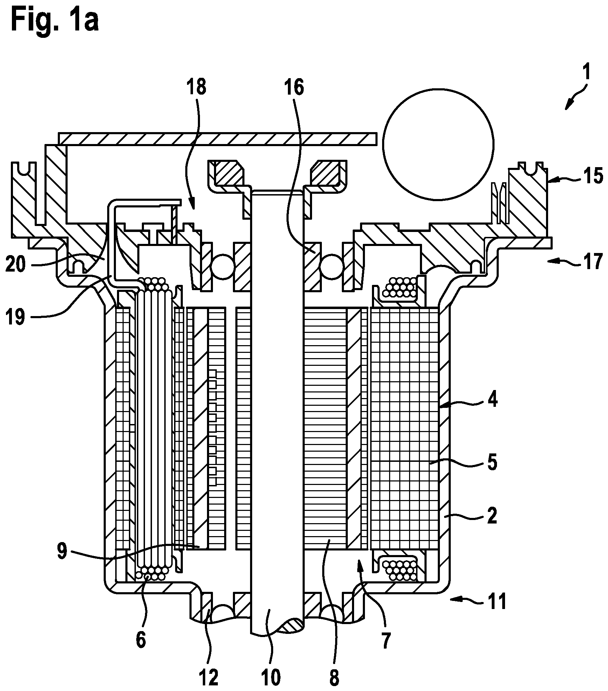

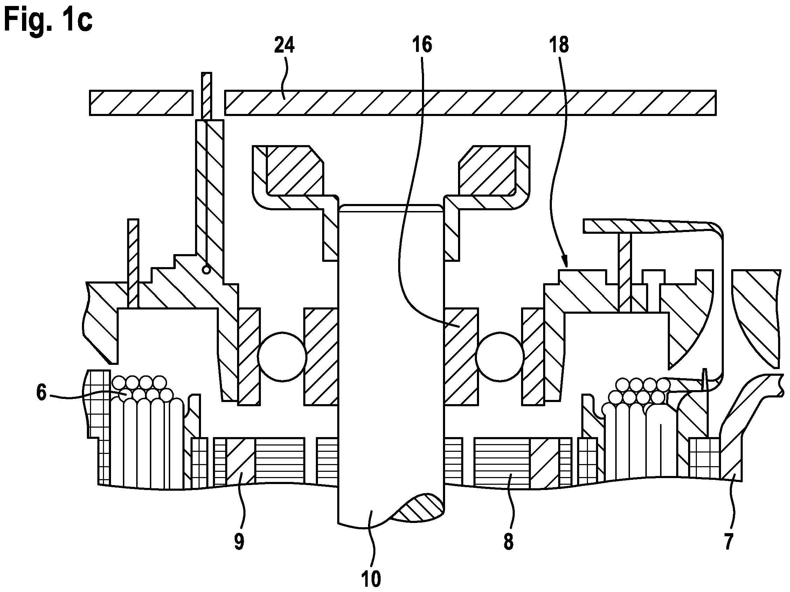

In den Figuren 1a bis 1c sind verschiedene Querschnittsansichten durch eine elektrische Maschine 1 in achsparalleler Richtung dargestellt. Die elektrische Maschine 1 umfasst einen Poltopf 2 (Gehäuse), auf dem ein Gehäusedeckel (Gehäuseteil) 3 aufgesetzt ist. In dem Poltopf 2 ist ein Stator 4 angeordnet, der Statorzähne 5 aufweist, die mit Statorspulen 6 versehen sind.

Der Stator 4 ist im Wesentlichen zylindrisch ausgebildet. Die Statorzähne 5 sind nach innen gerichtet und definieren eine Innenausnehmung 7, in der ein Läufer 8 der elektrischen Maschine 1 angeordnet ist. Der Läufer 8 ist mit Permanentmagneten 9 versehen, deren Polrichtung radial bezüglich einer Läuferwelle 10 verläuft. Der Läufer 8 ist drehbeweglich angeordnet, so dass durch geeignete Bestromung der Statorspulen 6 ein Drehmagnetfeld in der Innenausnehmung 7 erzeugt wird, dem der Läufer 8 aufgrund des durch die Permanentmagneten 9 erzeugten Magnetfelds folgt.

Der Poltopf 2 ist an einem ersten Ende 11 im Wesentlichen geschlossen und nur mit einem ersten Lager 12 versehen, um die Läuferwelle 10 zu lagern.

Das dem ersten Ende 11 gegenüberliegende zweite Ende 17 des Poltopfs 2 ist mit dem Gehäusedeckel 3 verschlossen. Das Aufsetzen auf den Poltopf 2 erfolgt bei eingesetztem Läufer 8, so dass die Läuferwelle 10 durch ein zweites Lager 16 hindurch geführt wird und der Gehäusedeckel 3 in radialer Richtung bezüglich der Läuferwelle 10 formschlüssig so auf den Poltopf 2 aufgesetzt wird, dass die Läuferwelle 10 gegen ein Verkippen in der Innenausnehmung 7 gehalten wird.

Insbesondere kann der in radialer Richtung wirkende Formschluss durch eine stufige Ausführung des zweiten Endes 17 des Poltopfs 2 und eine entsprechend komplementäre Formgebung des Gehäusedeckels 3 erreicht werden.

Der Gehäusedeckel 3 weist eine den Poltopf 2 im Wesentlichen verschließende, strukturiertes Deckelteil 18 auf, in der das zweite Lager 16 sowie Durchgänge 20 (Durchgangsöffnungen) für Anschlussdrähte 19 der Statorspulen 6 vorgesehen sind. Die Durchgänge 20 weisen in Richtung der Statorspulen 6, d. h. an der ins Gehäuseinnere gerichteten Seite, eine Trichterform auf, so dass eine Montage des Gehäusedeckels 3 auf den Poltopf 2 erheblich vereinfacht wird. Die Durchgänge 20 können einen kreisförmigen, ovalen oder eckigen Querschnitt aufweisen.

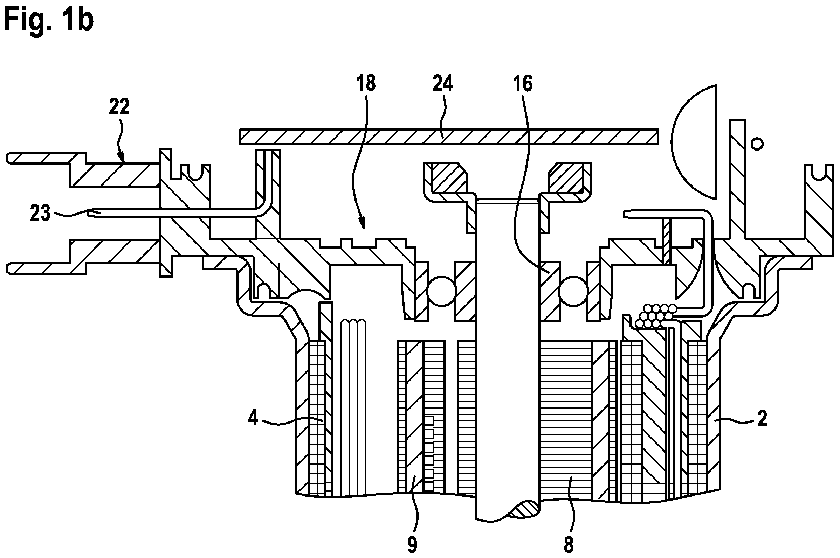

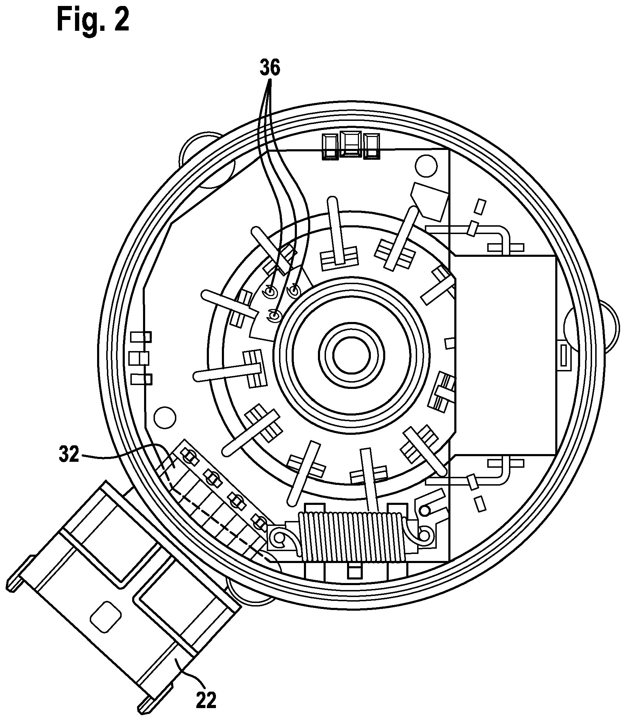

Wie insbesondere in den Figuren 1b und 2 dargestellt ist, weist das Deckelteil 18 des Gehäusedeckels 3 eine seitliche Erweiterung auf, die sich in radialer Richtung über die radialen Abmessungen des Poltopfs 2 erstreckt. Diese Erweiterung entspricht einer Steckverbindung 22 als Schnittstelle der elektrischen Maschine zum Bereitstellen einer externen Energieversorgung. Die Steckverbindung 22 weist mehrere Steckanschlusskontakte 23 auf, die beispielsweise als sich in radialer Richtung erstreckende Kontaktstifte ausgebildet sein können.

Weiterhin kann in dem Gehäusedeckel 3 eine Leiterplatte 24 angeordnet sein, die sich im Wesentlichen senkrecht zur axialen Richtung der Läuferwelle 10 erstreckt. Die Leiterplatte 24 trägt eine Steuerelektronik (nicht gezeigt), die mit dem Steckverbinder 22 und mit den Statorspulen 6 über durch Stanzteilegruppen gebildete elektrische Leiter verbunden ist. Vorzugsweise ist die Leiterplatte 24 so dimensioniert, dass sie in radialer Richtung nicht über den durch den Poltopf 2 definierten Bereich hinausragt.

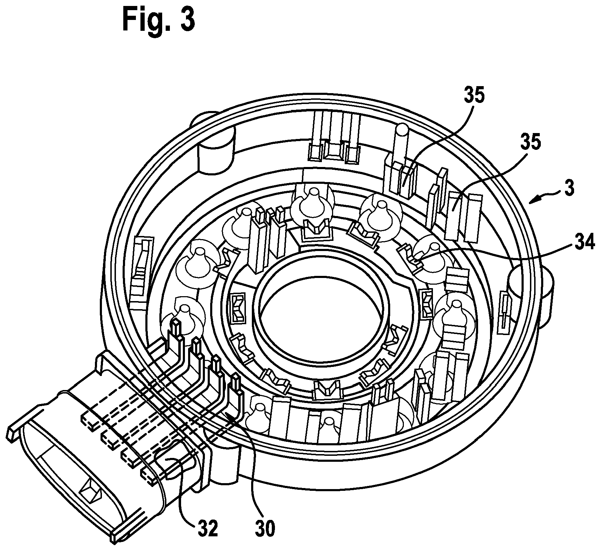

Beispielsweise aus Figur 3, die eine perspektivische Darstellung des Gehäusedeckels 3 zeigt, ist eine erste Stanzteilegruppe 30 (weitere Leiterelemente) ersichtlich, die die Steckanschlusskontakte 23 des Steckverbinders 22 und die Kontaktierung der Leiterplatte 24 bildet. Die erste Stanzteilegruppe 30 weist im gezeigten Ausführungsbeispiel mehrere (z. B. vier) längliche erste Stanzteile 32 auf, die sich in den Steckverbinder 22 erstrecken und im Gehäusedeckel 3 in Richtung der Leiterplatte 24 z. B. rechtwinklig abgebogen sind, um so eine elektrische Kontaktierung zwischen dem Steckverbinder 22 und der elektronischen Baugruppe auf der Leiterplatte 24 zu schaffen. Ein an dem Steckverbinder 22 angeschlossener elektrischer Steckverbinder kann dann über die ersten Stanzteile 32 der ersten Stanzteilegruppe 30 die elektronische Baugruppe mit elektrischer Energie versorgen und/oder deren Ansteuerung übernehmen.

Eine zweite Stanzteilegruppe (Leiterelemente) befindet sich zwischen der Leiterplatte 24 und dem Deckelteil 18 des Gehäusedeckels 3 und ist insbesondere auf das Deckelteil 18 aufgesetzt bzw. darin integriert. Die zweiten Stanzteile der zweiten Stanzteilegruppe sind in Figur 3 deutlich zu erkennen. Die zweiten Stanzteile stellen die Verbindung zwischen den Anschlüssen 19 der einzelnen Statorspulen 6 und der Leiterplatte 24 her.

Die zweiten Stanzteile der zweiten Stanzteilegruppe weisen Verbindungsteile 34 auf, die in einer Ebene parallel zur Leiterplatte 24 oder senkrecht zur axialen Richtung des zylindrischen Poltopfs 2 ausgerichtet sind. Die zweiten Stanzteile weisen eine oder mehrere nach oben gerichtete Anschlusselemente, z. B. in Form von Klemmen 35 auf, die jeweils einstückig mit dem entsprechenden Verbindungsteil 34 eines der zweiten Stanzteile ausgebildet sind. Weiterhin weisen die zweiten Stanzteile einen oder mehrere nach oben gerichtete Verbindungsabschnitte 36 auf, die sich in achsparalleler Richtung erstrecken und zum Kontaktieren der Leiterplatte 24 dienen.

Die nach oben stehenden Klemmen 35 sind jeweils einer Durchgangsöffnung 20 in dem Deckelteil 18 zugeordnet, so dass bei der Montage, d. h. beim Aufsetzen des Gehäusedeckels 3 auf den Poltopf 2, die zunächst achsparallel ausgerichteten Kontakte 19 der Statorspulen 6, insbesondere in Form von Anschlussdrähten, von den trichterförmigen Durchgangsöffnungen 20 eingefangen und durch diese hindurch geführt werden. Anschließend kann durch ein Umbiegen der einzelnen Anschlussdrähte 19 zu den entsprechenden Klemmen 35 erfindungsgemäß durch mechanisches Klemmen oder, bei sonstiger beispielhafter Ausbildung der Anschlusselemente, durch Löten oder Verschweißen, eine elektrische Verbindung geschaffen werden.

Die Stanzteilegruppen sind in den Gehäusedeckel 3 integriert. Der Gehäusedeckel 3 ist dazu vorzugsweise als Kunststoffspritzteil ausgeführt, in das die Stanzteile der Stanzteilegruppen eingebettet sind. Dadurch ist aufgrund der vorbestimmten Formgebung der ersten und zweiten Stanzteile die verschaltungslogische Zuordnung der einzelnen elektrischen Verbindungen bereits durch die Stanzteilegruppen implementiert und Fehler sind ausgeschlossen.

## Patentansprüche

1. Gehäuseteil (3) zum Aufbau einer rotatorischen elektrischen Maschine (1), umfassend:
- ein Deckelteil (18) zum Aufsetzen auf eine Stirnseite eines Gehäuses (2) der elektrischen Maschine (1);
- eine Leiterplatte (24) zum Bereitstellen einer elektronischen Baugruppe, um die Ansteuerung und/oder Energieversorgung der elektrischen Maschine (1) zu unterstützen;
- ein Leiterelement oder mehrere Leiterelemente zum Herstellen einer elektrischen Verbindung zwischen einer Statorspule (6) und der Leiterplatte (24), wobei das eine Leiterelement oder die mehreren Leiterelemente in dem Deckelteil (18) integriert ausgebildet ist oder sind, wobei das Deckelteil (18) mindestens eine Durchgangsöffnung (20) zum Aufnehmen eines Anschlussdrahts (19) zum Kontaktieren der Statorspule (6) aufweist, **dadurch gekennzeichnet, dass** die Durchgangsöffnung (20) ausschließlich auf der Seite des Deckelteils (18), die der Seite, von der sich das Anschlusselement (35) in Richtung der Leiterplatte (24) erstreckt, gegenüberliegt, trichterförmig ausgebildet ist, wobei das eine Leiterelement oder die mehreren Leiterelemente jeweils mindestens ein sich in Richtung der Leiterplatte (24) erstreckendes Anschlusselement (35) aufweisen, wobei die Durchgangsöffnung (20) so an dem Anschlusselement (35) angeordnet ist, dass der Anschlussdraht (19) nach dem Einfangen und Durchführen durch die trichterförmige Durchgangsöffnung (20) mit dem Anschlusselement (35) durch Umbiegen des Anschlussdrahts (19) zu einer entsprechenden Klemme (35), die in einer Ebene parallel zur Leiterplatte (24) oder senkrecht zur axialen Richtung eines zylindrischen Poltopfs des Gehäuses (2) ausgerichtet ist, und anschließend durch mechanisches Klemmen mit dieser Klemme (35) elektrisch verbindbar ist.

2. Gehäuseteil (3) nach Anspruch 1, wobei die Durchgänge (20) an der ins Gehäuseinnere gerichteten Seite in Richtung der Statorspulen (6) die Trichterform aufweisen.

3. Gehäuseteil (3) nach Anspruch 2, wobei die Durchgänge (20) einen kreisförmigen, ovalen oder eckigen Querschnitt aufweisen.

4. Gehäuseteil (3) nach einem der Ansprüche 2 bis 3, wobei der Anschlussdraht (19) durch mechanisches Klemmen oder durch Löten oder durch Verschweißen eine elektrische Verbindung mit dem Anschlusselement (35) bildet.

5. Gehäuseteil (3) nach einem der Ansprüche 1 bis 4, wobei das Deckelteil (18) ein Lager (16) aufweist, um eine Läuferwelle (10) zu lagern.

6. Gehäuseteil (3) nach einem der Ansprüche 1 bis 4, wobei die Leiterplatte (24) parallel zum Deckelteil (18) ausgerichtet ist.

7. Gehäuseteil (3) nach einem der Ansprüche 1 bis 6, wobei ein weiteres Leiterelement oder mehrere weitere Leiterelemente vorgesehen ist oder sind, um eine elektrische Kontaktierung der Leiterplatte (24) von extern zu ermöglichen.

8. Gehäuseteil (3) nach Anspruch 7, wobei sich das eine Leiterelement oder die mehreren Leiterelemente von dem Deckelteil (18) in radialer Richtung in eine Steckverbindung (22) erstreckt oder erstrecken.

9. Elektrische Maschine, umfassend:
- ein zylindrisches Gehäuse (2), in dem ein Stator (4) mit mindestens einer Statorspule (6) angeordnet ist; .
- ein Gehäuseteil (3) nach einem der Ansprüche 1 bis 8, um das zylindrische Gehäuse (2) stirnseitig zu verschließen, wobei ein Anschlussdraht (19) zum Kontaktieren der Statorspule durch das Deckelteil (18) zur Kontaktierung der Leiterplatte (24) geführt ist.

10. Elektrische Maschine (1) nach Anspruch 9, wobei das Gehäuseteil (3) formschlüssig an dem Gehäuse (2) gehalten ist.

## Claims

1. Housing part (3) for constructing a rotary electrical machine (1), comprising:
- a cover part (18) for fitting on an end side of a housing (2) of the electrical machine (1);
- a printed circuit board (24) for providing an electronic assembly in order to assist in actuating and/or supplying power to the electrical machine (1);
- a conductor element or a plurality of conductor elements for establishing an electrical connection between a stator coil (6) and the printed circuit board (24), wherein the one conductor element or the plurality of conductor elements is or are designed in a manner integrated in the cover part (18), wherein the cover part (18) has at least one passage opening (20) for receiving a connection wire (19) for making contact with the stator coil (6),
**characterized in that** the passage opening (20) is of funnel-like design only on that side of the cover part (18) which is situated opposite the side which extends from the connection element (35) in the direction of the printed circuit board (24),
wherein the one conductor element or the plurality of conductor elements has or have in each case at least one connection element (35) which extends in the direction of the printed circuit board (24), wherein the passage opening (20) is arranged on the connection element (35) such that the connection wire (19), after being captured and passed through the funnel-like passage opening (20), can be electrically connected to the connection element (35) by bending the connection wire (19) to form a corresponding terminal (35) which is oriented in a plane parallel to the printed circuit board (24) or perpendicular to the axial direction of a cylindrical pole pot of the housing (2), and can then be electrically connected to the said terminal (35) by mechanical clamping.

2. Housing part (3) according to Claim 1, wherein the passages (20) have the funnel shape in the direction of the stator coils (6) on that side which is directed into the housing interior.

3. Housing part (3) according to Claim 2, wherein the passages (20) have a circular, oval or angular cross section.

4. Housing part (3) according to either of Claims 2 and 3, wherein the connection wire (19) forms an electrical connection with the connection element (35) by mechanical clamping or by soldering or by welding.

5. Housing part (3) according to one of Claims 1 to 4, wherein the cover part (18) has a bearing (16) in order to mount a rotor shaft (10).

6. Housing part (3) according to one of Claims 1 to 4, wherein the printed circuit board (24) is oriented parallel to the cover part (18).

7. Housing part (3) according to one of Claims 1 to 6, wherein a further conductor element or a plurality of further conductor elements is or are provided in order to allow electrical contact to be made with the printed circuit board (24) from the outside.

8. Housing part (3) according to Claim 7, wherein the one conductor element or the plurality of conductor elements extends or extend from the cover part (18), in the radial direction, into a plug-in connection (22).

9. Electrical machine comprising:
- a cylindrical housing (2) in which a stator (4) with at least one stator coil (6) is arranged;
- a housing part (3) according to one of Claims 1 to 8 in order to close the cylindrical housing (2) at the end side, wherein a connection wire (19) for making contact with the stator coil is passed through the cover part (18) for making contact with the printed circuit board (24).

10. Electrical machine (1) according to Claim 9, wherein the housing part (3) is held on the housing (2) in an interlocking manner.

## Revendications

1. Partie de carter (3) destinée à construire une machine électrique (1) rotative, comprenant :
- une partie formant couvercle (18) destinée à être déposée sur un côté frontal d'un carter (2) de la machine électrique (1) ;
- un circuit imprimé (24) destiné à fournir un sous-ensemble électronique en vue d'assister l'excitation et/ou l'alimentation en énergie de la machine électrique (1) ;
- un élément conducteur ou plusieurs éléments conducteurs destinés à établir une liaison électrique entre une bobine de stator (6) et le circuit imprimé (24), ledit élément conducteur ou les plusieurs éléments conducteurs étant configuré(s) de manière intégrée dans la partie formant couvercle (18), la partie formant couvercle (18) possédant au moins une ouverture de passage (20) destinée à accueillir un fil de raccordement (19) servant à établir le contact avec la bobine de stator (6),
**caractérisée en ce que**
l'ouverture de passage (20) est configurée en forme d'entonnoir exclusivement sur le côté de la partie formant couvercle (18) qui se trouve à l'opposé du côté depuis lequel l'élément de raccordement (35) s'étend en direction du circuit imprimé (24),
ledit élément conducteur ou les plusieurs éléments conducteurs possédant respectivement au moins un élément de raccordement (35) qui s'étend en direction du circuit imprimé (24), l'ouverture de passage (20) étant disposée au niveau de l'élément de raccordement (35) de telle sorte que le fil de raccordement (19), après la capture et le passage à travers l'ouverture de passage (20) en forme d'entonnoir, peut être relié électriquement à l'élément de raccordement (35) par repliage du fil de raccordement (19) en une borne (35) correspondante, qui est orientée dans un plan parallèle au circuit imprimé (24) ou perpendiculaire à la direction axiale d'un creuset polaire cylindrique du carter (2), et ensuite par serrage mécanique avec cette borne (35).

2. Partie de carter (3) selon la revendication 1, les passages (20) présentant la forme d'entonnoir au niveau du côté orienté vers l'intérieur du carter en direction des bobines de stator (6).

3. Partie de carter (3) selon la revendication 2, les passages (20) présentant une section transversale circulaire, ovale ou polygonale.

4. Partie de carter (3) selon l'une des revendications 2 et 3, le fil de raccordement (19) formant une liaison électrique avec l'élément de raccordement (35) par serrage mécanique ou par brasage ou par soudage.

5. Partie de carter (3) selon l'une des revendications 1 à 4, la partie formant couvercle (18) possédant un palier (16) pour supporter un arbre de rotor (10) .

6. Partie de carter (3) selon l'une des revendications 1 à 4, le circuit imprimé (24) étant orienté parallèlement à la partie formant couvercle (18).

7. Partie de carter (3) selon l'une des revendications 1 à 6, un élément conducteur supplémentaire ou plusieurs éléments conducteurs supplémentaires étant présent(s) en vue de rendre possible l'établissement d'un contact électrique avec le circuit imprimé (24) depuis l'extérieur.

8. Partie de carter (3) selon la revendication 7, ledit élément conducteur ou les plusieurs éléments conducteurs s'étendant dans une connexion par enfichage (22) dans la direction radiale depuis la partie formant couvercle (18).

9. Machine électrique, comprenant :
- un carter cylindrique (2) dans lequel est disposé un stator (4) pourvu d'au moins une bobine de stator (6) ;
- une partie de carter (3) selon l'une des revendications 1 à 8, pour fermer le carter cylindrique (2) du côté frontal, un fil de raccordement (19) destiné à établir le contact avec la bobine de stator étant passé à travers la partie formant couvercle (18) en vue d'établir le contact avec le circuit imprimé (24).

10. Machine électrique (1) selon la revendication 9, la partie de carter (3) étant maintenue par complémentarité de formes contre le carter (2).
